# EUROPEAN PATENT APPLICATION

(11) **EP 2 720 001 A1**
(43) Date of publication of application: **16.04.2014**
(21) Application number: 12188536.2
(22) Date of filing: 15.10.2012
(51) Int. Cl.: G01C 21/36, G01C 21/34, G01C 21/20

(54) **A navigation system with a hearing device**

(71) Applicant: GN Store Nord A/S, 2750 Ballerup (DK)
(72) Inventor: Urup, Kathrine Steen, 2500 Valby (DK); Jensen, Jakob, 2650 Hvidovre (DK); Mossner, Peter, 2770 Kastrup (DK)
(74) Representative: Zacco Denmark A/S

(57) **Abstract**

A navigation system is provided, comprising a hearing device configured to be head worn and having loudspeakers for emission of sound towards the ears of a user, a GPS unit for determining the geographical position of the system, a user interface for user input of available time and/or maximum distance, a sound generator connected for outputting audio signals to the loudspeakers, and a processor configured for planning a route between selected Points-Of-Interest, which route can be covered within the input available time and/or maximum distance.

## Description

### FIELD OF THE INVENTION

A new navigation system is provided, comprising a GPS-unit and a hearing device having an inertial measurement unit for determination of orientation of a user's head and configured to plan routes incorporating selected Points of Interest (POIs) taking preferred directions of approach into account.

### BACKGROUND OF THE INVENTION

Typically, present GPS-units guide a user towards a desired destination using visual and audible guiding indications. For example, present GPS-units typically displays a map on a display screen that includes the current position of the user, typically at the centre of the displayed map, and a suitable route drawn on the displayed map towards a desired destination accompanied by spoken instructions, such as "turn left at the next junction".

Conventional GPS-units typically include a database with a variety of particular locations denoted Points-Of-Interest or POIs. POIs are typically shown on the map with an icon indication the particular type of POI in question at the geographical position of the POI.

Typically, POI categories include: Restaurants, Hotels, Shopping Centres, Industrial Estates, Police Stations, Post Offices, Banks, ATMs, Hospitals, Pharmacies, Schools, Churches, Golf Courses, Low Bridges, Historic Sites, Camping & Caravan Sites, etc.

Typically, the POI database includes various information on POIs, such as the type of POI, the name of the POI, longitude and latitude of the POI, the address of the POI, possible phone numbers, etc.

Some conventional GPS-units are configured for containing audio tours guiding the user along a specific route with MP3 audio files associated with respective POIs along the route and played automatically when the GPS-unit is within a certain distance from the POI in question. The audio tours with MP3 audio files are downloaded into the GPS-unit beforehand.

### SUMMARY OF THE INVENTION

A new method of navigation is provided, comprising the step of
planning a route between selected POIs, which route can be covered within an available time and/or has a specified maximum distance.

The method may further comprise the step of outputting sound signals to a person for guiding the person along the planned route.

A new navigation system is provided, comprising
a hearing device configured to be head worn and having loudspeakers for emission of sound towards the ears of a user,
a GPS unit for determining the geographical position of the system,
a user interface for user input available time and/or maximum distance,
a sound generator connected for outputting audio signals to the loudspeakers, and a processor configured for planning a route between selected POIs, which route can be covered within the available time and/or a maximum distance.

The processor may further be configured for controlling the sound generator to output audio signals guiding the user along the planned route.

A user of the system may for example decide to go sightseeing using the navigation system, e.g. driving, biking, walking, etc. The user may then use the user interface to enter one or more of the maximum amount of time available for the sightseeing tour, a maximum distance to be covered during the tour, a desired starting position, e.g. the current geographical position, a desired end position, e.g. returning to the current geographical position, one or more types of POI to visit during the tour, etc.

The navigation system comprises a database or has access to a database, or both, with information on POIs, including, where appropriate, opening hours of POIs.

The processor may be configured for taking opening hours into account during planning of the route.

The user interface may be configured for user selection of whether or not the processor has to take opening hours into account during planning of the route.

It is well-known that the view of certain POIs can be more or less spectacular in dependence of the direction of arrival to the POI in question, e.g. a city hall may look best when arriving from a direction providing a frontal view of the city hall with the city square in the field of view in front of it. The database may include information on preferred directions of arrival to some POIs. Also, the preferred direction of arrival may vary as a function of the time of the day, e.g. a view may be spoiled by direct sun in the eyes of the viewer, or a certain shadow effect may be desirable.

The processor may be configured for taking preferred directions of arrival, possibly as a function of the time of the day, into account during planning of the route.

The user interface may be configured for user selection of whether or not the processor has to take preferred directions of arrival into account during planning of the route.

Some POIs may move as a function of time, e.g. during sport events, such as cycle races, car races, marathons, etc., the position of various participants or groups of participants may be recorded and stored in a database in real time during the event for access by the navigation system. Likewise, the positions as function of time for public transportation vehicles may be recorded and stored in a database in real time for access by the navigation system.

The processor may be configured for taking information on position as a function of time into account during planning of the route.

The user interface may be configured for user selection of specific sports events to be watched along the planned routed. The user interface may be configured for user selection of participants in sports events to be watched along the planned routed, for example the current leading runner in a marathon, or a specific runner, or runners of a selected nationality, may be identified to be watched at some point along the planned route .

The user interface may be configured for user selection of whether or not the processor has to take position as a function of time into account during planning of the route.

In this way, the navigation system may plan the route in such a way that the user will arrive at the POIs along the planned route from directions providing the most spectacular views of the POIs in question. Further, the navigation system may determine suitable one or more positions along the planned route for the user to watch a sport event, such as selected participants in a sport event.

The user interface may be configured for user selection of type of transportation to be used when travelling the planned route, such as walking, bicycling, driving, sailing, etc.

The hearing device may accommodate an inertial measurement unit positioned for determining head yaw, when a user wears the hearing device in its intended operational position on the user's head.

The navigation system may comprise one or more pairs of filters with Head-Related Transfer Functions (HRTFs), each of which may be selectively configured for filtering the output from the sound generator into a binaural acoustic sound signal output by the loudspeakers of the hearing device for emission towards the ears of the user, whereby the user perceives the sound as coming from a sound source positioned in a direction corresponding to the respective HRTF.

The HRTF of the pair of filters simulates the transmission of sound from a sound source located in a specific position to each of the two eardrums of the user.

Preferably, the one or more pairs of filters comprise digital filters with registers holding the filter coefficients. Thus, the filter coefficients of a selected HRTF are loaded into the appropriate pair of registers and the respective pair of filters operates to filter with transfer functions of the selected HRTF. In this way, several or all of the HRTFs may be provided by a single pair of filters by loading appropriate filter coefficients into their registers.

The input to the user's auditory system consists of two signals, namely sound pressures at the left eardrum and sound pressures at the right eardrum, in the following termed the binaural sound signals. Thus, if sound pressures are accurately reproduced at the eardrums, the human auditory system will not be able to distinguish the reproduced sound pressures from sound pressures originated from a 3-dimensional spatial sound field.

It is not fully known how the human auditory system extracts information about distance and direction to a sound source, but it is known that the human auditory system uses a number of cues in this determination. Among the cues are spectral cues, reverberation cues, interaural time differences (ITD), interaural phase differences (IPD) and interaural level differences (ILD).

The transmission of a sound wave from a sound source positioned at a given direction and distance in relation to the left and right ears of the listener is described in terms of two transfer functions, one for the left ear and one for the right ear, that include any linear distortion, such as coloration, interaural time differences and interaural spectral differences. Such a set of two transfer functions, one for the left ear and one for the right ear, is called a HRTF. Each transfer function of the HRTF is defined as the ratio between a sound pressure p generated by a plane wave at a specific point in or close to the appertaining ear canal (p_{L} in the left ear canal and p_{R} in the right ear canal) in relation to a reference. The reference traditionally chosen is the sound pressure p_{I} that would have been generated by a plane wave at a position right in the middle of the head with the listener absent.

The HRTF changes with direction and distance of the sound source in relation to the ears of the listener. It is possible to measure the HRTF for any direction and distance and simulate the HRTF, e.g. electronically, e.g. by pair of filters. If such pair of filters are inserted in the signal path between a playback unit, such as a media player, e.g. an Ipod ®, and headphones used by a listener, the listener will achieve the perception that the sounds generated by the headphones originate from a sound source positioned at the distance and in the direction as defined by the HRTF simulated by the pair of filters, because of the approximately true reproduction of the sound pressures in the ears.

The HRTF contains all information relating to the sound transmission to the ears of the listener, including diffraction around the head, reflections from shoulders, reflections in the ear canal, etc., and therefore, due to the different anatomy of different individuals, the HRTFs are different for different individuals.

However, it is possible to provide general HRTFs which are sufficiently close to corresponding individual HRTFs for users in general to obtain the same sense of direction of arrival of a sound signal that has been filtered with pair of filters with the general HRTFs as of a sound signal that has been filtered with the corresponding individual HRTFs of the individual in question.

General HRTFs are disclosed in WO 93/22493.

For some directions of arrival, corresponding HRTFs may be constructed by approximation, for example by interpolating HRTFs corresponding to neighbouring angles of sound incidence, the interpolation being carried out as a weighted average of neighbouring HRTFs, or an approximated HRTF can be provided by adjustment of the linear phase of a neighbouring HTRF to obtain substantially the interaural time difference corresponding to the direction of arrival for which the approximated HRTF is intended.

For convenience, the pair of transfer functions of a pair of filters simulating an HRTF is also denoted a HRTF even though the pair of filters can only approximate an HRTF.

Electronic simulation of the HRTFs by a pair of filters causes sound to be reproduced by the hearing device in such a way that the user perceives sound sources to be localized outside the head in specific directions. Thus, sound reproduced with pairs of filters with a HRTF makes it possible to guide the user in a certain direction.

The processor may be configured for determining the direction towards the next Point-Of-Interest with relation to the determined geographical position of the system and head yaw of the user, in order to be able to guide the user along the planned route, or substantially along the planned route in the event that the user inadvertently or purposely has deviated from the planned route, providing a HRTF for the pair of filters corresponding to the determined direction towards the next POI or waypoint so that the user has the perception of hearing sound arriving from the determined direction.

For example, the user may not be required to follow a specific route to the next POI; rather, the user is given a direction towards the next POI, and the user may then freely select a route to follow that will ultimately lead the user towards the next POI. For example, in a city a variety of routes may be selected that will lead to the next POI. In the event that the POI has a preferred direction of arrival, the determined direction may lead to a waypoint from which the next POI will be arrived at from the preferred direction of arrival. Accordingly, sound can be reproduced with an HRTF corresponding to the direction towards the next POI, or corresponding waypoint, so that the user perceives the sound source to be located and operated like a sonar beacon at the next POI or waypoint to guide the user towards this point. The virtual sonar beacon operates until the user reaches the respective next POI or waypoint or is otherwise aborted by the user.

Further, the user is free to explore the surroundings and for example walk along certain streets as desired, e.g. act on impulse, while listening to sound perceived to come from the direction toward the next POI or waypoint (also) to be visited, whereby the user is not restricted or urged to follow a specific route determined by the navigation system.

Instead, the user may desire to be guided along the planned route by the navigation system, and in this case the processor is configured to control the pair of filters so that the audio signals from the sound generator are filtered by HRTFs corresponding to currently required travelling directions along streets or other paths along the planned route. Changes in direction will be heard at junctions and may be indicated by increased loudness or pitch of the sound.

The user interface may be configured for user selection of the above types of route guidance to be followed.

In this way, the user is relieved from the task of watching a map in order to follow a suitable route towards the next POI or waypoint.

The user is also relieved from listening to spoken commands intending to guide the user along a suitable route towards the POI or next waypoint.

The sound generator may output audio signals representing any type of sound suitable for this purpose, such as speech, e.g. from an audio book, radio, etc, music, tone sequences, etc.

The sound generator may output a tone sequence, e.g. of the same frequency, or the frequency of the tones may be increased or decreased with distance to the next POI or waypoint. Alternatively, or additionally, the repetition rate of the tones may be increased or decreased with distance to the next POI or waypoint.

The user may for example decide to listen to a radio station while following the planned route, in which event the processor is configured for controlling the sound generator to generate audio signals originating from the desired radio station subsequently filtered by the HRTF in question, so that the user perceives to hear the desired radio station as a sonar beacon located at the next POI or waypoint.

The user may instead decide to listen to spoken information on the next POI in which event the processor is configured for controlling the sound generator to generate audio signals with spoken information on the next POI subsequently filtered by the HRTF in question, so that the user perceives to hear the spoken information as a sonar beacon located at the next POI or waypoint.

The processor may be configured for, when proximate a specific POI, determining the direction towards the specific POI with relation to the determined geographical position of the system and head yaw of the user, providing the HRTF corresponding to the determined direction, and controlling the sound generator for outputting audio signals with spoken information on the specific POI through the selected HRTF so that the user has the perception of hearing spoken information on the specific POI as arriving from the specific POI.

Thus, a navigation system is provided that relies on communication to the user of audible information on the planned route. Information is communicated with the hearing device with a sense of direction so that audible information relating to guidance of the user will be perceived by the user to be emitted by a sound source located in the guiding direction.

In this way, need to visually consult a display of a map of the surroundings is minimized making it easy and convenient for the user to navigate to POIs along the planned route.

The navigation system may contain a database of POIs in a way well-known in conventional hand-held GPS-units.

Some or all of the POI records of the database of the navigation system may include audio files with spoken information on the respective POI.

Alternatively, or additionally, the navigation system may have access to remote servers hosting one or more databases on POIs, e.g. through a Wide-Area-Network, or a Local Area Network, e.g. providing access to the Internet.

Thus, the navigation system may have a wireless antenna, transmitter, and receiver for communicating over a wireless network with a remote server accommodating a database with information on POIs, e.g. including audio files with spoken information on some or all of the POIs. The wireless network may be a mobile telephone network, such as the GSM network.

The wireless network may provide a link through an Internet gateway to the Internet.

The navigation system may transmit the current position of the system to the remote server and requesting information on nearby POIs, preferably of one or more selected categories, and preferably sequenced in accordance with a selected rule of priority, such as proximity, popularity, user ratings, professional ratings, cost of entrance, opening hours with relation to actual time, etc. A maximum number of POIs may also be specified.

The server may search for matching POIs and transmit the matching records, e.g. including audio files, to the navigation system.

In the same way, the navigation system may communicate with a navigation enabled remote server and request navigation tasks to be performed by the remote navigation enabled server instead of performing the navigation tasks locally by the navigation system. The navigation system may communicate position data of the current position, e.g. current longitude, latitude; or, the received satellite signals, and position data of a destination, e.g. longitude, latitude; or street address, etc., to the navigation enabled server that performs the requested navigation tasks and transmits resulting data to the navigation system for presentation to the user.

The hearing device comprises a pair of small loudspeakers, designed to be held in place close to the user's ears. The pair of loudspeakers receives the binaural audio signal. The inertial measurement unit, or part of the inertial measurement unit, may be accommodated in a housing together with one loudspeaker of the hearing device; or, the inertial measurement unit may have parts accommodated in separate housings, each of which accommodates one of the pair of loudspeakers.

The hearing device may be an Ear-Hook, In-Ear, On-Ear, Over-the-Ear, Behind-the-Neck, Helmet, Headguard, etc, headset, headphone, earphone, earbud, ear defender, earmuff, etc.

Further, the hearing device may be a hearing aid, e.g. a binaural hearing aid, such as a BTE, a RIE, an ITE, an ITC, a CIC, etc, binaural hearing aid.

The hearing device may have a headband carrying two earphones. The headband is intended to be positioned over the top of the head of the user as is well-known from conventional headsets and headphones with one or two earphones. The inertial measurement unit, or part of the inertial measurement unit, may be accommodated in the headband of the hearing device.

The hearing device may have a neckband carrying two earphones. The neckband is intended to be positioned behind the neck of the user as is well-known from conventional neckband headsets and headphones with one or two earphones. The inertial measurement unit, or part of the inertial measurement unit, may be accommodated in the neckband of the hearing device.

The navigation system may also comprise a hand-held device, such as a GPS-device, a smart phone, e.g. an Iphone, an Android phone, etc, e.g. with a GPS-unit, etc, interconnected with the hearing device.

The hearing device may comprise a data interface for transmission of data from the inertial measurement unit to the hand-held device.

The data interface may be a wired interface, e.g. a USB interface, or a wireless interface, such as a Bluetooth interface, e.g. a Bluetooth Low Energy interface.

The hearing device may comprise an audio interface for reception of an audio signal from the hand-held device.

The audio interface may be a wired interface or a wireless interface.

The data interface and the audio interface may be combined into a single interface, e.g. a USB interface, a Bluetooth interface, etc.

The hearing device may for example have a Bluetooth Low Energy data interface for exchange of head jaw values and control data between the hearing device and the hand-held device, and a wired audio interface for exchange of audio signals between the hearing device and the hand-held device.

Based on received head yaw values, the hand-held device can display maps on the display of the hand-held device in accordance with orientation of the head of the user as projected onto a horizontal plane, i.e. typically corresponding to the plane of the map. For example, the map may be displayed with the position of the user at a central position of the display, and the current head x-axis pointing upwards.

POIs may also be indicated on the displayed map in addition to the spoken information presented to the user. POIs for which spoken information is not presented to the user may also be displayed on the map, preferably with icons that distinguishes these POIs from the selected POIs.

A user interface of the hand-held device may constitute the user interface of the navigation system or a part of the user interface of the navigation system.

For example, the user may use the user interface of the hand-held device to select a specific POI that the user desires to visit in a way well-known from prior art hand-held GPS-units.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The hand-held device may display maps with the planned route or part of the planned route, preferably including the current geographical position of the system. The hand-held device may further transmit spoken guiding instructions to the hearing device through the audio interface as is well-known in the art, supplementing the other audio signals provided by the navigation system.

The hand-held device may accommodate the sound generator of the navigation system.

The hand-held device may accommodate the processor, or parts of the processor, of the navigation system.

The hand-held device may accommodate all or some of the one or more pairs of filters with HRTFs of the navigation system.

The hand-held device may accommodate a database with POIs and with audio files containing spoken, e.g. narrated, information on some or all of the respective POIs.

The hand-held device may accommodate a text-to-speech processor for converting text information on POIs into spoken information on the POIs.

The hand-held device may accommodate the interface of the navigation system for connection with a Wide-Area-Network and/or a Local-Area-Network.

For example, the hand-held device may have the wireless antenna, transmitter, and receiver for communicating over a wireless network with a remote server accommodating a database with information on POIs, e.g. including audio files with spoken information on some or all of the POIs. The wireless network may be a mobile telephone network, such as the GSM network.

The hand-held device may accommodate the processor that is configured for requesting information on a particular POI via the Wide-Area-Network and/or Local-Area-Network, and for receiving the information via the network.

The hearing device may have a microphone for reception of spoken commands by the user, and the processor may be configured for decoding of the spoken commands and for controlling the navigation system to perform the actions defined by the respective spoken commands.

The hearing device may comprise an ambient microphone for receiving ambient sound for user selectable transmission towards at least one of the ears of the user.

In the event that the hearing device provides a sound proof, or substantially, sound proof, transmission path for sound emitted by the loudspeaker(s) of the hearing device towards the ear(s) of the user, the user may be acoustically disconnected in an undesirable way from the surroundings. This may for example be dangerous when moving in traffic.

The hearing device may have a user interface, e.g. a push button, so that the user can switch the microphone on and off as desired thereby connecting or disconnecting the ambient microphone and one loudspeaker of the hearing device.

The hearing device may have a mixer with an input connected to an output of the ambient microphone and another input connected to an output of the sound generator, and an output providing an audio signal that is a weighted combination of the two input audio signals.

The user input may further include means for user adjustment of the weights of the combination of the two input audio signals, such as a dial, or a push button for incremental adjustment.

The hearing device may have a threshold detector for determining the loudness of the ambient signal received by the ambient microphone, and the mixer may be configured for including the output of the ambient microphone signal in its output signal only when a certain threshold is exceeded by the loudness of the ambient signal.

Further ways of controlling audio signals from an ambient microphone and a voice microphone is disclosed in US 2011/0206217 A1.

The navigation system also has a GPS-unit for determining the geographical position of the user based on satellite signals in the well-known way. Hereby, the navigation system can provide the user's current geographical position based on the GPS-unit and the orientation of the user's head based on data from the hearing device.

Throughout the present disclosure, the term GPS-unit is used to designate a receiver of satellite signals of any satellite navigation system that provides location and time information anywhere on or near the Earth, such as the satellite navigation system maintained by the United States government and freely accessible to anyone with a GPS receiver and typically designated "the GPS-system", the Russian GLObal NAvigation Satellite System (GLONASS), the European Union Galileo navigation system, the Chinese Compass navigation system, the Indian Regional Navigational Satellite System, etc, and also including augmented GPS, such as StarFire, Omnistar, the Indian GPS Aided Geo Augmented Navigation (GAGAN), the European Geostationary Navigation Overlay Service (EGNOS), the Japanese Multifunctional Satellite Augmentation System (MSAS), etc.

In augmented GPS, a network of ground-based reference stations measure small variations in the GPS satellites' signals, correction messages are sent to the GPS-system satellites that broadcast the correction messages back to Earth, where augmented GPS-enabled receivers use the corrections while computing their positions to improve accuracy. The International Civil Aviation Organization (ICAO) denotes this type of system a satellite-based augmentation system (SBAS).

In absence of GPS-signal, e.g. when buildings or terrain block the satellite signals, the navigation system may continue its operation relying on data from the inertial measurement unit of the hearing device utilising dead reckoning as is well-known from Inertial navigation systems in general. The processor uses information from gyros and accelerometers of the inertial measurement unit of the hearing device to calculate speed and direction of travel as a function of time and integrates to determine geographical positions of the user with the latest determined position based on GPS-signals as a starting point, until appropriate GPS-signal reception is resumed.

Like the inertial measurement unit, the GPS-unit may be accommodated in the hearing device for determining the geographical position of the user, when the user wears the hearing device in its intended operational position on the head, based on satellite signals in the well-known way. Hereby, the user's current position and orientation can be provided to the user based on data from the hearing device.

Alternatively, the GPS-unit may be included in the hand-held device that is interconnected with the hearing device. The hearing device may accommodate a GPS-antenna that is connected with the GPS-unit in the hand-held device, whereby reception of GPS-signals is improved in particular in urban areas where, presently, reception of GPS-signals by hand-held GPS-units can be difficult.

The inertial measurement unit may also have a magnetic compass for example in the form of a tri-axis magnetometer facilitating determination of head yaw with relation to the magnetic field of the earth, e.g. with relation to Magnetic North.

The sound generator of the navigation system is connected for outputting audio signals to the loudspeakers via the one or more pairs of filters with respective HRTFs for generation of a binaural acoustic sound signal emitted towards the eardrums of the user. In this way, sound from the hearing device will be perceived by the user as coming from a sound source positioned in a direction corresponding to the respective HRTF of the current pair of filters.

The navigation system may be operated without a visual display, and thus without displayed maps to be consulted by the user, rather the user may provide input with spoken commands and receive aural guidance by sound emitted by the hearing device in such a way that the sound is perceived by the user as coming from the direction towards the next POI or waypoint.

Thus, the navigation system may operate without a hand-held device, and rely on aural user interface using spoken commands and aural guidance, including spoken messages.

In this case, the navigation system comprises a hearing device configured to be head worn and having
loudspeakers for emission of sound towards the ears of a user,
an inertial measurement unit positioned for determining head yaw, when the user wears the hearing device in its intended operational position on the user's head,
a GPS unit for determining the geographical position of the system,
a user interface for user input including at least one of available time and maximum distance,
a sound generator connected for outputting audio signals to the loudspeakers, and
a processor configured for planning a route between selected Points-Of-Interest, which route can be covered within the at least one of available time and maximum distance.

The processor may further be configured for controlling the sound generator to output audio signals guiding the user along the planned route.

As used herein, the terms "processor", "signal processor", "controller", "system", etc., are intended to refer to CPU-related entities, either hardware, a combination of hardware and software, software, or software in execution.

For example, a "processor", "signal processor", "controller", "system", etc., may be, but is not limited to being, a process running on a processor, a processor, an object, an executable file, a thread of execution, and/or a program.

By way of illustration, the terms "processor", "signal processor", "controller", "system", etc., designate both an application running on a processor and a hardware processor. One or more "processors", "signal processors", "controllers", "systems" and the like, or any combination hereof, may reside within a process and/or thread of execution, and one or more "processors", "signal processors", "controllers", "systems", etc., or any combination hereof, may be localized on one hardware processor, possibly in combination with other hardware circuitry, and/or distributed between two or more hardware processors, possibly in combination with other hardware circuitry.

HRFTs may form part of a processor.

### BRIEF DESCRIPTION OF THE DRAWINGS

Below, the invention will be described in more detail with reference to the exemplary embodiments illustrated in the drawings, wherein
- Fig. 1: shows a hearing device with an inertial measurement unit,
- Fig. 2: shows (a) a head reference coordinate system and (b) head yaw,
- Fig. 3: shows (a) head pitch and (b) head roll,
- Fig. 4: is a block diagram of one embodiment of the new navigation system,
- Fig. 5: illustrates one exemplary use of the new navigation system, and
- Fig. 6: schematically illustrates the operation of the system, and
- Fig. 7: is a flowchart of an exemplary method.

### DETAILED DESCRIPTION

The new navigation system will now be described more fully hereinafter with reference to the accompanying drawings, in which various embodiments are shown. The accompanying drawings are schematic and simplified for clarity, and they merely show details which are essential to the understanding of the new navigation system, while other details have been left out. The new navigation system may be embodied in different forms not shown in the accompanying drawings and should not be construed as limited to the embodiments and examples set forth herein. Rather, these embodiments and examples are provided so that this disclosure will be thorough and complete, and will fully convey the scope of the invention to those skilled in the art.

Similar reference numerals refer to similar elements in the drawings.

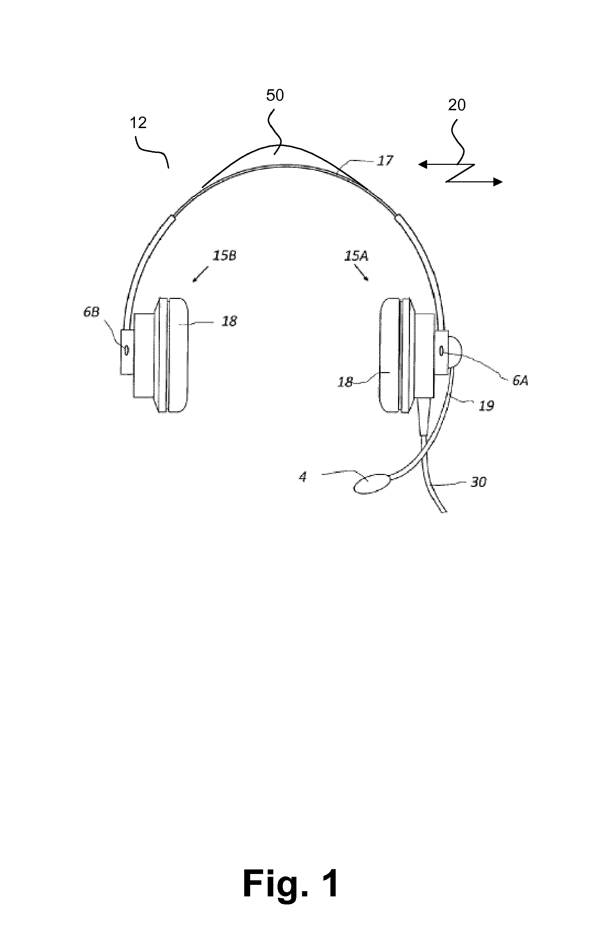

Fig. 1 shows an exemplary hearing device 12 of the navigation system, having a headband 17 carrying two earphones 15A, 15B similar to a conventional corded headset with two earphones 15A, 15B interconnected by a headband 17.

Each earphone 15A, 15B of the illustrated hearing device 12 comprises an ear pad 18 for enhancing the user comfort and blocking out ambient sounds during listening or two-way communication.

A microphone boom 19 with a voice microphone 4 at the free end extends from the first earphone 15A. The microphone 4 is used for picking up the user's voice e.g. during two-way communication via a mobile phone network and/or for reception of user commands to the navigation system.

The housing of the first earphone 15A comprises a first ambient microphone 6A and the housing of the second earphone 15B comprises a second ambient microphone 6B.

The ambient microphones 6A, 6B are provided for picking up ambient sounds, which the user can select to mix with the sound received from a hand-held device (not shown), e.g. a mobile phone, a media player, such as an Ipod, a GPS-unit, a smart phone, a remote control for the hearing device 12, etc.

The user can select to mix ambient sounds picked up by the ambient microphones 6A, 6B with sound received from the hand-held device (not shown) as already mentioned.

When mixed-in, sound from the first ambient microphone 6A is directed to the speaker of the first earphone 15A, and sound from the second ambient microphone 6B is directed to the speaker of the second earphone 15B.

A cord 30 extends from the first earphone 15A to a hand-held device (not shown).

A Bluetooth transceiver in one of the earphones 15A, 15B is wirelessly connected by a Bluetooth link 20 to a Bluetooth transceiver in the hand-held device (not shown).

The cord 30 may be used for transmission of audio signals from the microphones 4, 6A, 6B to the hand-held device (not shown), while the Bluetooth network may be used for data transmission of data from the inertial measurement unit to the hand-held device (not shown) and commands from the hand-held device (not shown) to the hearing device 12, such as turn a selected microphone 4, 6A, 6B on or off.

A similar hearing device 12 may be provided without a Bluetooth transceiver so that the cord 30 is used for both transmission of audio signals and data signals; or, a similar hearing device 12 may be provided without a cord, so that a Bluetooth network is used for both transmissions of audio signals and data signals.

A similar hearing device 12 may be provided without the microphone boom 19, whereby the microphone 4 is provided in a housing on the cord as is well-known from prior art headsets.

A similar hearing device 12 may be provided without the microphone boom 19 and microphone 4 functioning as a headphone instead of a headset.

An inertial measurement unit 50 is accommodated in a housing mounted on or integrated with the headband 17 and interconnected with components in the earphone housing 16 through wires running internally in the headband 17 between the inertial measurement unit 50 and the earphone 15.

The user interface of the hearing device 12 is not shown, but may include one or more push buttons, and/or one or more dials as is well-known from conventional headsets.

The orientation of the head of the user is defined as the orientation of a head reference coordinate system with relation to a reference coordinate system with a vertical axis and two horizontal axes at the current location of the user.

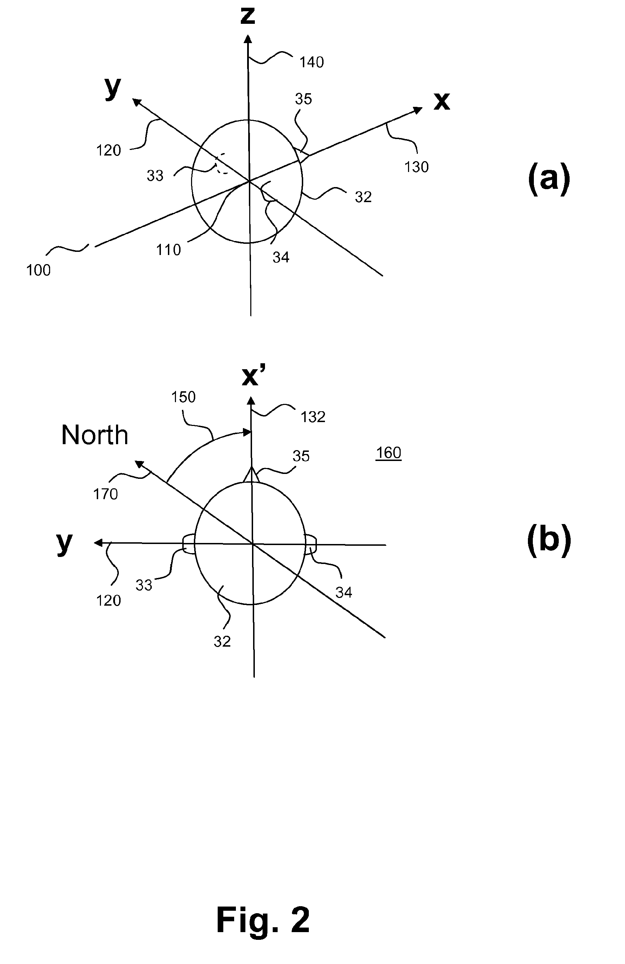

Fig. 2(a) shows a head reference coordinate system 100 that is defined with its centre 110 located at the centre of the user's head 32, which is defined as the midpoint 110 of a line 120 drawn between the respective centres of the eardrums (not shown) of the left and right ears 33, 34 of the user.

The x-axis 130 of the head reference coordinate system 100 is pointing ahead through a centre of the nose 35 of the user, its y-axis 112 is pointing towards the left ear 33 through the centre of the left eardrum (not shown), and its z-axis 140 is pointing upwards.

Fig. 2(b) illustrates the definition of head yaw 150. Head yaw 150 is the angle between the current x-axis' projection x' 132 onto a horizontal plane 160 at the location of the user, and a horizontal reference direction 170, such as Magnetic North or True North.

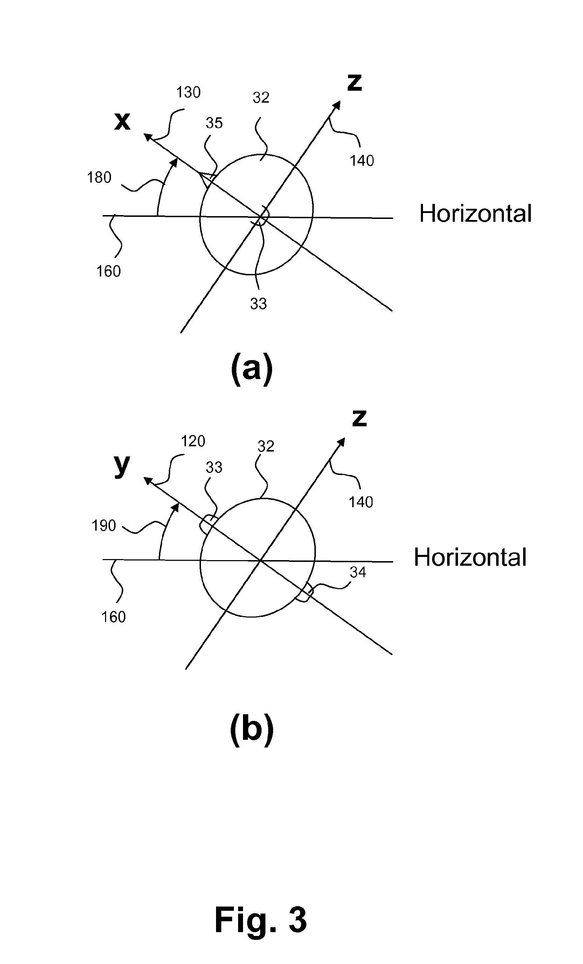

Fig. 3(a) illustrates the definition of head pitch 180. Head pitch 180 is the angle between the current x-axis 130 and the horizontal plane 160.

Fig. 3(b) illustrates the definition of head roll 190. Head roll 190 is the angle between the y-axis and the horizontal plane.

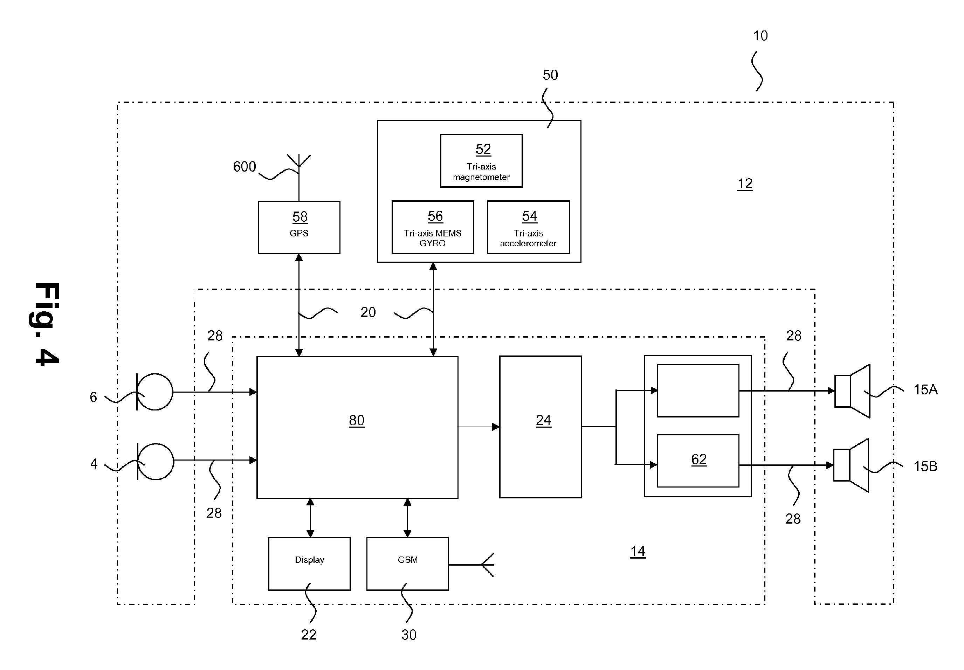

Fig. 4 shows a block diagram of a new navigation system 10 comprising a hearing device 12 and a hand-held device 14.

The various components of the system 10 may be distributed otherwise between the hearing device 12 and the hand-held device 14. For example, the hand-held device 14 may accommodate the GPS-receiver 58. Another system 10 may not have a hand-held device 14 so that all the components of the system 10 are accommodated in the hearing device 12. The system 10 without a hand-held device 14 does not have a display, and speech synthesis is used to issue messages and instructions to the user and speech recognition is used to receive spoken commands from the user. The illustrated navigation system 10 comprises a hearing device 12 comprising electronic components including two loudspeakers 15A, 15B for emission of sound towards the ears of the user (not shown), when the hearing device 12 is worn by the user in its intended operational position on the user's head.

The hearing device 12 shown in Fig. 4 may be of the type shown in Fig. 1, or the illustrated hearing device 12 may be of any other known type, including an Ear-Hook, In-Ear, On-Ear, Over-the-Ear, Behind-the-Neck, Helmet, Headguard, etc, headset, headphone, earphone, ear defenders, earmuffs, etc.

Further, the illustrated hearing device 12 may be a binaural hearing aid, such as a BTE, a RIE, an ITE, an ITC, a CIC, etc, binaural hearing aid.

The illustrated hearing device 12 has a voice microphone 4, e.g. accommodated in an earphone housing or provided at the free end of a microphone boom mounted to an earphone housing.

The hearing device 12 further has one or two ambient microphones 6A, 6B, e.g. at each ear, for picking up ambient sounds.

The hearing device 12 has an inertial measurement unit 50 positioned for determining head yaw, head pitch, and head roll, when the user wears the hearing device 12 in its intended operational position on the user's head.

The illustrated inertial measurement unit 50 has tri-axis MEMS gyros 56 that provide information on head yaw, head pitch, and head roll in addition to tri-axis accelerometers 54 that provide information on three dimensional displacement of the hearing device 12.

The hearing device 12 also has a GPS-unit 58 for determining the geographical position of the user, when the user wears the hearing device 12 in its intended operational position on the head, based on satellite signals in the well-known way. Hereby, the user's current position and orientation can be provided to the user based on data from the hearing device 12.

Optionally, the hearing device 12 accommodates a GPS-antenna configured for reception of GPS-signals, whereby reception of GPS-signals is improved in particular in urban areas where, presently, reception of GPS-signals can be difficult.

In a hearing device 12 without the GPS-unit 58, the hearing device 12 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units can be difficult.

The illustrated inertial measurement unit 50 also has a magnetic compass in the form of a tri-axis magnetometer 52 facilitating determination of head yaw with relation to the magnetic field of the earth, e.g. with relation to Magnetic North.

The hand-held device 14 of the navigation system 10 has a processor 80 with input/output ports connected to the sensors of the inertial measurement unit 50, and configured for determining and outputting values for head yaw, head pitch, and head roll, when the user wears the hearing device 12 in its intended operational position on the user's head.

The processor 80 may further have inputs connected to accelerometers of the inertial measurement unit, and configured for determining and outputting values for displacement in one, two or three dimensions of the user when the user wears the hearing device 12 in its intended operational position on the user's head, for example to be used for dead reckoning in the event that GPS-signals are lost.

Thus, the illustrated navigation system 10 is equipped with a complete attitude heading reference system (AHRS) for determination of the orientation of the user's head that has MEMS gyroscopes, accelerometers and magnetometers on all three axes. The processor provides digital values of the head yaw, head pitch, and head roll based on the sensor data.

The hearing device 12 has a data interface 20 for transmission of data from the inertial measurement unit to the processor 80 of the hand-held device 14, e.g. a smart phone with corresponding data interface. The data interface 20 is a Bluetooth Low Energy interface.

The hearing device 12 further has a conventional wired audio interface 28 for audio signals from the voice microphone 4, and for audio signals to the loudspeakers 15A, 15B for interconnection with the hand-held device 14 with corresponding audio interface 28.

This combination of a low power wireless interface for data communication and a wired interface for audio signals provides a superior combination of high quality sound reproduction and low power consumption of the navigation system 10.

The hearing device 12 has a user interface (not shown), e.g. with push buttons and dials as is well-known from conventional headsets, for user control and adjustment of the hearing device 12 and possibly the hand-held device 14 interconnected with the hearing device 12, e.g. for selection of media to be played.

The hand-held device 14 receives head yaw from the inertial measurement unit of the hearing device 12 through the Bluetooth Low Energy wireless interface. With this information, the hand-held device 14 can display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface (not shown) of the hand-held device 14 to input information on a geographical position the user desires to visit in a way well-known from prior art hand-held GPS-units.

The hand-held device 14 may display maps on the display 22 with the planned route, or a part of the planned route, preferably including the current position of the system, preferably displayed at the centre of the displayed map, as a supplement to the aural guidance provided through the hearing device 12.

The hand-held device 14 may further transmit spoken guiding instructions to the hearing device 12 through the audio interface 28 as is well-known in the art, supplementing the other audio signals provided to the hearing device 12.

In addition, the microphone of hearing device 12 may be used for reception of spoken commands by the user, and the processor 80 may be configured for speech recognition, i.e. decoding of the spoken commands, and for controlling the navigation system 10 to perform actions defined by respective spoken commands.

The hand-held device 14 filters the output of a sound generator 24 of the hand-held device 14 with a pair of filters 60, 62 with an HRTF into a binaural audio signal, i.e. two output audio signals, one for the left ear and one for the right ear, corresponding to the filtering of the HRTF of a direction in which the user should travel in order to follow the planned route, or in the event that the user has deviated from the planned route, in order to visit the next POI.

This filtering process causes sound reproduced by the hearing device 12 to be perceived by the user as coming from a sound source localized outside the head from a direction corresponding to the HRTF in question, i.e. from a virtual sonar beacon located at the next POI or waypoint.

In this way, the user is relieved from the task of watching a map in order to follow the planned route towards the next POI.

The user is also relieved from listening to spoken commands intending to guide the user to the next POI or waypoint.

Further, the user is free to explore the surroundings and for example walk along certain streets as desired, e.g. act on impulse, while listening to sound perceived to come from the direction towards the next POI or waypoint to be visited, whereby the user is not restricted to follow a specific route determined by the navigation system 10.

The sound generator 24 may output audio signals representing any type of sound suitable for this purpose, such as speech, e.g. from an audio book, radio, etc, music, tone sequences, etc.

The user may for example decide to listen to a radio station while walking, and the sound generator 24 generates audio signals reproducing the signals originating from the desired radio station filtered by pair of filters 60, 62 with the HRTFs in question, so that the user perceives to hear the desired music from the direction towards the next POI or waypoint.

At some point in time, the user may decide to follow the route planned by the navigation system 10, and in this case the processor controls the HRTF filters so that the audio signals from the sound generator 24 are filtered by HRTFs corresponding to desired directions along streets or other paths along the determined route. Changes in indicated directions will be experienced at junctions and may be indicated by increased loudness or pitch of the sound in addition to the perceived change in direction from which the sound seems to arrive. Also in this case, the user is relieved from having to visually consult a map in order to be able to follow the planned route.

In the event that the processor controls the sound generator 24 to output a tone sequence, e.g. of the same frequency, the frequency of the tones may be increased or decreased with distance to the next POI or waypoint. Alternatively, or additionally, the repetition rate of the tones may be increased or decreased with distance to the next POI or waypoint.

The navigation system 10 may be operated without using the visual display, i.e. without the user consulting displayed maps, rather the user enters his or her input with spoken commands and receives aural guidance by sound emitted by the hearing device 12 in such a way that the sound is perceived by the user as coming from the direction towards the next POI or waypoint.

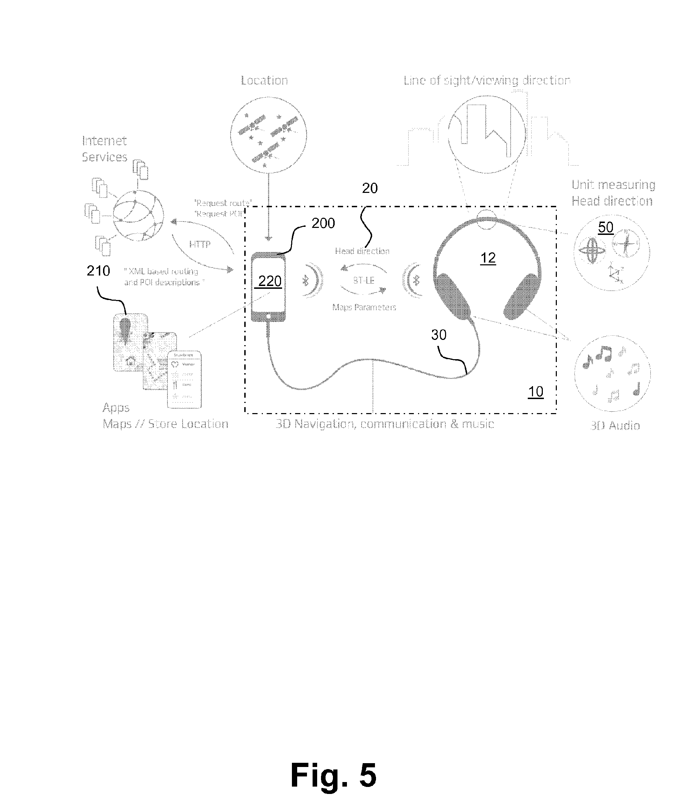

Fig. 5 illustrates the configuration and operation of an example of the new navigation system 10 with a hearing device 12 of one of the previously mentioned types together with a hand-held device 14, which in the illustrated example is a smart phone 200, e.g. an Iphone, an Android phone, etc, with a navigation app.

The navigation app contains instructions for the processor of the smart phone to perform the operations of the processor of the navigation system 10 and to perform the filtering according to a selected HRTF.

The hearing device 12 is connected to the smart phone 200 with a chord 30 forming part of a wired audio interface between the two units 12, 200 for transmission of speech and music from the smart phone 200 to the hearing device 12, and speech from the voice microphone (not shown) to the smart phone 200 as is well-known in the art.

As indicated in Fig. 5 by the various exemplary map-images 210 displayed on the smart phone display 220, the navigation app is executed by the smart phone in addition to other tasks that the user selects to be performed simultaneously by the smart phone 200, such as playing music, and performing telephone calls when required.

The navigation app configures the smart phone 200 for data communication with the hearing device 12 through a Bluetooth Low Energy wireless interface 20 available in the smart phone 200 and the hearing device 12, e.g. for reception of head yaw from the inertial measurement unit 50 of the hearing device 12. In this way, the navigation app can control display of maps on the display of the smart phone 200 in accordance with the head yaw of the user. For example, the map may be displayed with the position of the user at a central position of the display, and the head x-axis pointing upwards.

The illustrated navigation system 10 operates to position a virtual sonar beacon at a desired geographical location, whereby a guiding sound signal is transmitted to the ears of the user that is perceived by the user to arrive from a certain direction in which the user should travel in order to arrive at the next POI or waypoint. The guiding sound is generated by a sound generator 24 (shown in Fig. 4) of the smart phone 200, and the output of the sound generator 24 (shown in Fig. 4) is filtered with a pair of filters (shown in Fig. 4) of the smart phone 200 forming a selected HRTF, into a binaural audio signal output to the loudspeakers for emission of a corresponding binaural acoustic sound signal to the left ear and right ear of the user. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The smart phone 200 may contain a database of POIs as is way well-known in conventional smart phones.

Some or all of the POI records of the database of the navigation system include audio files with spoken information on the respective POI.

Alternatively, or additionally, the navigation system may have access to remote servers hosting databases on POIs, e.g. through a Wide-Area-Network, or a Local Area Network, e.g. providing access to the Internet.

Thus, the navigation system may have a wireless antenna, transmitter, and receiver for communicating over a wireless network with a remote server accommodating a database with information on POIs, e.g. including audio files with spoken information on some or all of the POIs. The wireless network may be a mobile telephone network, such as a GSM network.

The wireless network may provide a link through an Internet gateway to the Internet.

The navigation system may transmit the current position of the system to the remote server and requesting information on nearby POIs, preferably of one or more selected categories, and preferably sequenced in accordance with a selected rule of priority, such as proximity, popularity, user ratings, professional ratings, cost of entrance, opening hours with relation to actual time, etc. A maximum number of POIs may also be specified.

The server searches for matching POIs and transmits the matching records, e.g. including audio files, to the navigation system that sequentially presents spoken information on the matching POIs with the hearing instrument.

The spoken information may include opening hours of POIs, time table of upcoming venues of POIs, etc.

The smart phone may be configured request navigation tasks to be performed by a remote navigation enabled server whereby the smart phone communicates position data of the current position, e.g. current longitude, latitude; or, the received satellite signals, and position data of a destination, e.g. longitude, latitude; or street address, etc., to the navigation enabled server that performs the requested navigation tasks and transmits resulting data to the smart phone for presentation to the user.

The user may request presentations of the POIs along the planned route to be retrieved through the Internet from Wikipedia. Textual information on the POIs may then be acquired from Wikipedia by the navigation system and converted into speech by the text-to-speech converter of the smart phone.

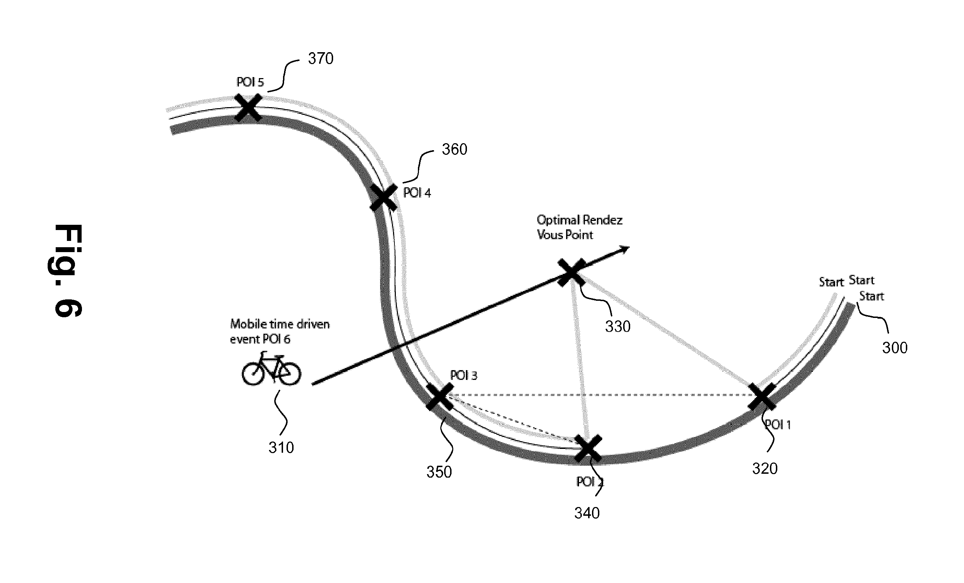

Fig. 6 schematically illustrates a route to various POIs 1 - 5 as planned by the new navigation system.

At any time during use of the navigation system, the user may use the user interface to request the system 10 to plan a tour visiting various POIs between a starting point and an end point, e.g. by pushing a specific button located at the hearing device 12.

For example, the user may enter "walking" to request planning of a walking trip, and the user may select his or her current position 300 as the starting point of the tour. Any geographical position may be selected in a way well-known from conventional GPS-devices, as the starting point. The user may select the time available for the walking trip to be 2 hours. The user may further select the end point to be arbitrary, i.e. to be suggested by the system.

As indicated at item 310, a cycling race is taking place that day, and the user enters into the system that he or she wants to watch the rider in the lead during the walking trip.

The user may further specify which types of POIs to be included in the planned tour, e.g. in the illustrated example, the user has selected historical sites and museums. In response to the user request, the navigation system has identified the historical POIs and museums within walking distance of the specified starting point taking the specified available time into account and opening hours together with estimated positions of the rider in the lead of the cycling race. The estimated position may be updated during the walking trip. The POIs may have ratings so that the system may plan a route which maximizes the sum of ratings for the POIs included in the route.

At the start of the walking trip, the system has planned a route that visits POI 320 first, and then proceeds to watch the leading rider of the cycling race at 330, and then proceeds to POI 340, 350, 360, and 370 in sequence; however, when the user has visited POI 320, the system receives updated information that the start of the cycling race has been delayed until further notice, and since POI 340 is not open yet, the system re-plans the route so that POI 350 becomes the next POI. Having visited POI 350, POI 340 is now open, and the cycling race has started, however leaving adequate time for the user to visit POI 340 and subsequently watch the leading rider at 330, note that 330 may now indicate a different position than 330 at the start of the walking trip, and thus the system re-plans the tour so that the sequence of POIs to be visited is now: POI 340, POI 330, POI 350, POI 360 and POI 370.

During the walking trip, narrated information on the next POI is communicated to the user with the hearing device, preferably with a sense of direction so that narrated information relating to the next POI on the planned route will be perceived by the user to be emitted by a sound source located at the site in question so that the narrator will be perceived to be positioned at the respective POIs, or possibly waypoints preceding the respective POIs inserted for guiding the user to arrive at the POI in question from the preferred direction of arrival.

In this way, the user is provided with spatial knowledge about the surroundings and the need to visually consult a display of the surroundings is minimized making it easy and convenient for the user to navigate to the next POI.

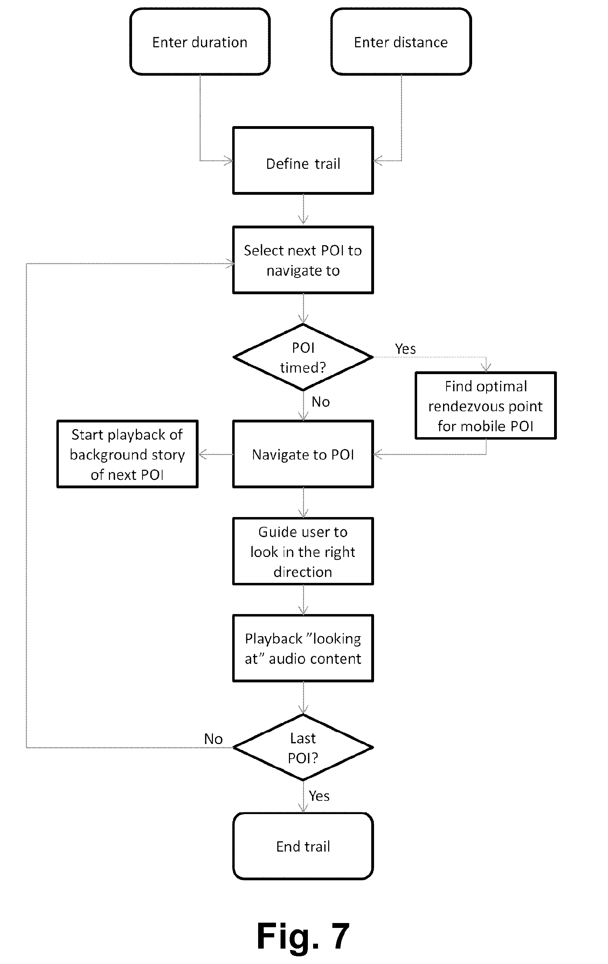

Fig. 7 shows a flowchart of the operation of an exemplary new navigation system as for example illustrated in Fig. 5. In the illustrated example, the user may have planned a walking trip, as for example illustrated in Fig. 6, well in advance, e.g. days before the actual walking trip is going to take place.

The system may contain audio files that are suitable for play back to the user, when the user has finished his or her visit at one POI and moves on to the next POI. Information on the next POI is then played back to the user for entertainment and information during the planned tour. The system may further contain audio files that are suitable for play back when the user has arrived at the next POI, e.g. with details on the appearance of the POI in question.

In the vicinity of a specific POI, audio information on that POI is preferably played to the user with a sense of direction, i.e. so that narrated information relating to the proximate POI will be perceived by the user to be emitted by a sound source located at the POI in question so that the narrator will be perceived to be positioned at the respective POIs. In this way, the user may be guided to look in the right direction.

## Claims

1. A navigation system comprising
a hearing device configured to be head worn and having loudspeakers for emission of sound towards the ears of a user,
a GPS unit for determining the geographical position of the system,
a user interface for user input including at least one of available time and maximum distance,
a sound generator connected for outputting audio signals to the loudspeakers, and
a processor configured for planning a route between selected Points-Of-Interest, which route can be covered within the at least one of available time and maximum distance.

2. A navigation system according to claim 1, wherein the processor is configured for controlling the sound generator to output audio signals guiding the user along the planned route.

3. A navigation system according to claim 1 or 2, comprising a database interface to a database with information on opening hours of at least one Point-Of-Interest, and wherein the processor is configured for taking opening hours into account during planning of the route.

4. A navigation system according to claim 3, wherein the database includes information on preferred directions of approach of at least one Point-Of-Interest, and wherein the processor is configured for taking preferred directions of approach into account during planning of the route.

5. A navigation system according to claim 4, wherein the database includes information on preferred directions of approach as a function of time of day of at least one Point-Of-Interest, and wherein the processor is configured for taking preferred directions of approach into account during planning of the route.

6. A navigation system according to any of claims 3 - 5, wherein the database includes information on position as a function of time of at least one Point-Of-Interest, and wherein the processor is configured for taking information on position as a function of time into account during planning of the route.

7. A navigation system according to any of the preceding claims, comprising an interface for connection with a Wide-Area-Network, and wherein the processor is configured for requesting information on a particular POI via the Wide-Area-Network and for receiving the information via the Wide-Area-Network.

8. A navigation system according to any of the preceding claims, wherein the selected Points-Of-Interests are selected from a subset of Points-Of-Interest specified by the user.

9. A navigation system according to any of the preceding claims, wherein
the processor is configured for outputting spoken information on the next Point-Of-Interest when the system travels towards the next Point-Of-Interest.

10. A navigation system according to any of the preceding claims, comprising a pair of filters with a Head-Related Transfer Function configured for filtering output from the sound generator into a binaural acoustic sound signal output by the loudspeakers of the hearing device for emission towards the ears of the user and perceived by the user as coming from a sound source positioned in a direction corresponding to the Head-Related Transfer Function, and wherein
the hearing device accommodates
an inertial measurement unit positioned for determining head yaw, when a user wears the hearing device in its intended operational position on the user's head, and wherein
the processor is configured for controlling the sound generator to output audio signals guiding the user along the planned route by
determining a direction towards a next Point-Of-Interest of the planned route with relation to the current geographical position of the system and the determined head yaw of the user,
controlling the sound generator to output audio signals, and
providing a Head-Related Transfer function for the pair of filters corresponding to the determined direction towards the next Point-Of-Interest so that the user has the perception of hearing sound arriving from the determined direction.

11. A navigation system according to claim 10, wherein
the processor is configured for
determining the direction towards the next Point-Of-Interest with relation to the determined geographical position of the system and head yaw of the user,
providing the Head-Related Transfer Function corresponding to the determined direction, and
controlling the sound generator for outputting audio signals with spoken information on the next Point-Of-Interest through the selected Head-Related-Transfer Function so that the user has the perception of hearing spoken information on the next Point-Of-Interest arriving from the next Point-Of-Interest.

12. A navigation system according to any of the previous claims, comprising
a hand-held device interconnected with the hearing device, and wherein
the hand-held device accommodates the sound generator and the pair of filters with the Head-Related Transfer functions.

13. A navigation system according to claim 12, wherein
the hand-held device accommodates the user interface configured for reception of spoken user commands.

14. A navigation system according to claim 12 or 13, wherein
the hand-held device comprises a display, and a processor configured to display a map on the display with an indication of the determined geographical position and head yaw of the user, and icons of the selected Points-Of-Interests at the respective geographical positions of the selected Points-Of-Interests.

15. A navigation system according to any of claims 12 - 14, wherein
the hand-held computer accommodates the GPS unit.

16. A method of navigation comprising the step of
planning a route between selected Points-Of-Interest, which route can be covered within at least one of available time and maximum distance.
